# EUROPÄISCHE PATENTSCHRIFT

(11) **EP 2 429 895 B1**
(45) Veröffentlichungstag und Bekanntmachung des Hinweises auf die Patenterteilung: **17.04.2013**
(21) Anmeldenummer: 10719337.7
(22) Anmeldetag: 10.05.2010
(51) Int. Cl.: B64C 7/00, B64C 9/02, B64C 9/16

(54) **VERKLEIDUNG FÜR EINE AUFTRIEBSHILFE**
FAIRING FOR A HIGH-LIFT DEVICE
CARÉNAGE D'UN HYPERSUSTENTATEUR

(30) Priorität: 13.05.2009 DE 102009003084; 13.05.2009 US 177831 P
(43) Veröffentlichungstag der Anmeldung: 21.03.2012
(73) Patentinhaber: Airbus Operations GmbH, 21129 Hamburg (DE)
(72) Erfinder: EMUNDS, Rolf, 28357 Bremen (DE)
(74) Vertreter: Isarpatent
(86) Internationale Anmeldenummer: PCT/EP2010/056374
(87) Internationale Veröffentlichungsnummer: WO 2010/130690

(56) Entgegenhaltungen:
- EP-A1- 1 627 811
- DE-A1- 3 641 247
- FR-A1- 2 905 930
- FR-A1- 2 930 235
- US-A- 4 712 750

## Beschreibung

Die vorliegende Erfindung betrifft ein Flugzeug aufweisend eine Auftriebshilfe mit einer Verkleidung, welche mindestens einen Strake aufweist.

Obwohl auf beliebige Luft- und Raumfahrzeugen anwendbar, werden die vorliegende Erfindung sowie die ihr zugrunde liegende Problematik in Bezug auf Landeklappenträgerverkleidungen strahlgetriebener Verkehrsflugzeuge näher erläutert.

Derartige Flugzeuge weisen im Allgemeinen sogenannte Landeklappen auf, die während der Start- und Landungsphase ausgefahren werden können, um erhöhten Auftrieb bei langsamen Fluggeschwindigkeiten bereitzustellen. Hierzu sind üblicherweise die Landeklappen in an der Unterseite der Tragflächen angeordneten Landeklappenträgern geführt. Um während des Flugs bei voller Reisegeschwindigkeit einen möglichst geringen Luftwiderstand zu bieten, werden die Landeklappenträger mit entsprechend aerodynamisch optimierten Verkleidungen umgeben, die darüber hinaus zur Erzeugung von Auftrieb gestaltet sein können.

Insbesondere bei Flugzeugen mit Strahltriebwerken, die unterhalb der Tragflächen angebracht sind, können jedoch durch Einwirkung des Antriebsstrahls eines Triebwerks auf eine Landeklappenträgerverkleidung unerwünschte Vibrationen der Landeklappenträgerverkleidung auftreten. Neben räumlicher Nähe von Triebwerk und Landeklappenträgerverkleidung können bestimmte Betriebszustände des Flugzeugs das Auftreten von Vibrationen begünstigen, z.B. wenn sich das Flugzeug bei maximalem Schub in Ruhe am Boden befindet oder noch auf der Startbahn beschleunigt. Die Vibrationen können zu Schäden wie z.B. Haarrissen an den Landeklappenträgerverkleidungen oder deren Aufhängungen bis hin zu einem kompletten Versagen der Struktur im Pivot-Bereich führen.

Die Druckschrift DE 36 41 247 A1 offenbart ein Flugzeug mit einem Triebwerk und einer Verkleidung für eine Auftriebshilfe.

Die Druckschrift FR 2 905 930 A1 offenbart an einer Verkleidung Turbulenzenerzeuger anzubringen.

Die Druckschrift US 4 712 750 A offenbart eine Temperatursteuerung für ein Flugzeugtriebwerk.

Die Druckschrift EP 1 627 811 A1 offenbart einen Turbulenzenerzeuger an einer Triebwerksgondel.

Es ist daher Aufgabe der vorliegenden Erfindung, bei Flugzeugen schädigende Einwirkungen der Antriebsstrahlen von Strahltriebwerken auf Verkleidungen von Auftriebshilfen wie Landeklappenträgern zu vermeiden.

Erfindungsgemäß wird diese Aufgabe durch die Merkmale des unabhängigen Patentanspruchs 1 gelöst.

Die der vorliegenden Erfindung zugrunde liegende Idee besteht darin, an einer Verkleidung für eine Auftriebshilfe für ein Flugzeug mindestens einen Strake auszubilden, der von einer Außenfläche der Verkleidung abragt und sich wesentlich in Flugrichtung erstreckt. Unter einem Strake ist hierbei ein flächiges (flächenoptimiertes) Gebilde wie eine Platte oder Planke zu verstehen.

Dadurch, dass der Strake von der Außenfläche der Verkleidung abragt und sich wesentlich in der Flugrichtung des Flugzeugs erstreckt, blockiert der Strake aerodynamische Flüsse an der Außenfläche der Verkleidung, die signifikante Flusskomponenten senkrecht zur Flugrichtung aufweisen. Hierdurch wird, wenn die Verkleidung z.B. während der Startphase in den Antriebsstrahl eintaucht, die Entstehung instabiler, oszillierender Wirbelsysteme aufgrund solcher Flusskomponenten unterdrückt und ein stabiler aerodynamischen Fluss bewirkt, der die Verkleidung in der Flugrichtung umströmt. Wegen der Abwesenheit oszillierender Wirbelsysteme treten an der Außenfläche der Verkleidung keine signifikanten oszillierenden Druckschwankungen und damit keine schädigende Vibrationen verursachenden Kräfte auf.

In den Unteransprüchen finden sich vorteilhafte Ausgestaltungen und Verbesserungen der Erfindung.

Gemäß einer bevorzugten Weiterbildung ragt der Strake wesentlich senkrecht von der Außenfläche ab. Hierdurch werden quer zum Strake verlaufende Flusskomponenten zu beiden Seiten hin besonders effektiv blockiert.

Gemäß einer bevorzugten Weiterbildung läuft der Strake in einer Ebene, welche mit einer vertikal nach unten weisenden Richtung einen Winkel zwischen 0° und 40° aufweist. Dies bewirkt, dass am Strake bei Anströmung eine Seitenkraft angreift, die keine Nulldurchgänge zeigt, sodass Verkleidung und Strake besonders schonend nur in einer Richtung belastet werden.

Gemäß einer bevorzugten Weiterbildung weist der Strake eine Länge von 1 m bis 3 m entlang der Außenfläche der Verkleidung auf. Ein Strake dieser Länge stabilisiert den aerodynamischen Fluss hinreichend bei geringem Eigengewicht.

Gemäß einer bevorzugten Weiterbildung weist der Strake an seinem vorderen Ende eine Vorderkante und/oder an seinem hinteren Ende eine Hinterkante auf, die wesentlich senkrecht zur der Außenfläche der Verkleidung verläuft. Hierdurch wird eine kontrollierte Anströmung der Vorderkante bzw. ein kontrollierter Strömungsabriss von der Hinterkante bewirkt.

Gemäß einer bevorzugten Weiterbildung weist der Strake an seinem vorderen Ende eine geringere Höhe auf als an seinem hinteren Ende. Vorzugsweise beträgt die Höhe des Strakes an seinem vorderen Ende eine Höhe 1 cm oder weniger, sodass die Bildung von Wirbeln an der Vorderkante vermieden wird.

Gemäß einer bevorzugten Weiterbildung weist der Strake an seinem hinteren Ende eine Höhe von 15 cm oder weniger auf. Ein Strake dieser Höhe stabilisiert den aerodynamischen Fluss hinreichend bei ausreichender Eigenstabilität und geringem Eigengewicht. Vorzugsweise weist der Strake eine maximale Höhe an einer von seinem vorderen und/oder hinteren Ende beabstandeten Position auf.

Gemäß einer bevorzugten Weiterbildung weist der Strake eine Dicke zwischen 2 mm und 5 mm auf. Dies ermöglicht eine hohe Stabilität des Strakes bei geringem Gewicht. Vorzugsweise weist der Strake an einer oberen Kante ein wesentlich rechteckiges Querprofil auf. Dies ermöglicht einen kontrollierten Strömungsabriss an der Oberkante.

Gemäß einer bevorzugten Weiterbildung stellt die Erfindung ein Flugzeug mit einer Auftriebshilfe bereit, die eine derartige Verkleidung aufweist. Vorzugsweise umfasst das Flugzeug ein Strahltriebwerk, das so angeordnet ist, dass die Verkleidung während einer Betriebsphase des Flugzeugs zumindest teilweise in einen Strahl des Strahltriebwerks eintaucht. Auf diese Weise können Strahltriebwerke und Auftriebshilfen ohne konstruktive Einschränkungen in ihrer Position optimiert sein, ohne dass Schäden an der Verkleidung auftreten.

Gemäß einer bevorzugten Weiterbildung ist der Strake auf einer dem Strahl zugewandten Seite der Verkleidung ausgebildet. Hierdurch wirkt der Strake besonders effizient, unmittelbar am Ort direkter Anströmung durch den Antriebsstrahl.

Die Erfindung wird im Folgenden anhand von Ausführungsbeispielen unter Bezugnahme auf die beiliegenden Figuren der Zeichnung näher erläutert.

Von den Figuren zeigen:
- Fig. 1A-B: ausschnitthafte Draufsichten in Flugrichtung auf eine Flugzeugtragfläche mit einer Verkleidung gemäß zweier Ausführungsformen der Erfindung;
- Fig. 2: eine schematische perspektivische Ansicht eines Strakes einer Verkleidung gemäß einer Ausführungsform;
- Fig. 3: simulierte Funktionskurven von Druckverläufen an Strakes von Verkleidungen gemäß verschiedenen Ausführungsformen;
- Fig. 4: eine perspektivische Ansicht eines hinteren Abschnitts einer Verkleidung gemäß einer Ausführungsform, mit simuliertem Strömungsverlauf;
- Fig. 5: eine Unteransicht des Abschnitts der Verkleidung aus Fig. 4, mit simuliertem Strömungsverlauf;
- Fig. 6: eine perspektivische Ansicht eines hinteren Abschnitts einer herkömmlichen Verkleidung, mit simuliertem Strömungsverlauf; und
- Fig. 7: eine Unteransicht des Abschnitts der Verkleidung aus Fig. 6, mit simuliertem Strömungsverlauf.

In den Figuren bezeichnen dieselben Bezugszeichen gleiche oder funktionsgleiche Komponenten, soweit nichts Gegenteiliges angegeben ist.

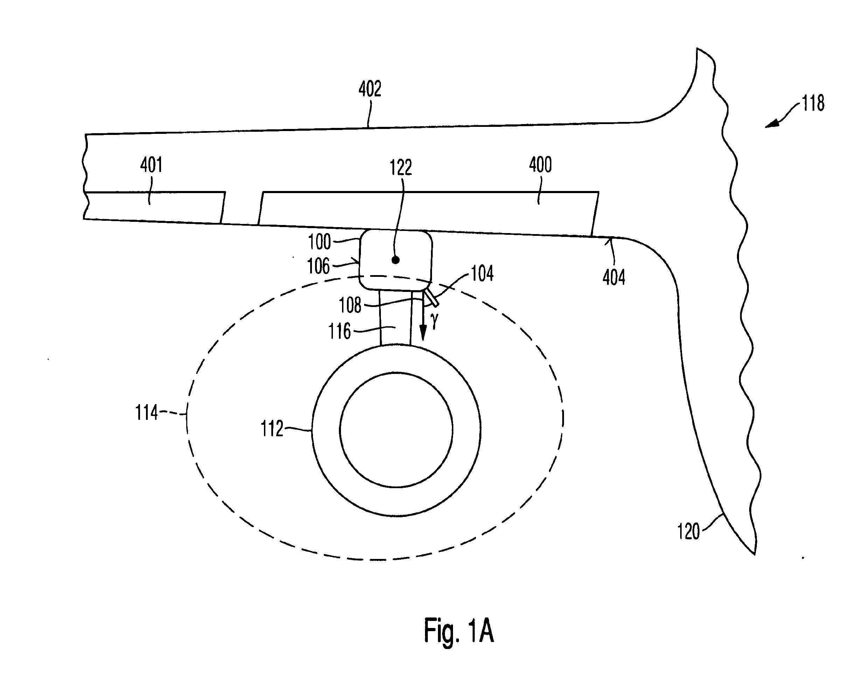

Figur 1A zeigt in schematischer Ansicht von hinten einen Ausschnitt einer Tragfläche 402 eines strahlgetriebenen Verkehrsflugzeugs 118, die an einem Rumpf 120 des Flugzeugs 118 befestigt ist. Die Blickrichtung des Betrachters stimmt mit der Flugrichtung des Flugzeugs 118 überein. An ihrer hinteren, dem Betrachter zugewandten Kante 404 weist die Tragfläche 402 Landeklappen 400, 401 auf, die als Auftriebshilfe ausfahrbar von einem Landeklappenträger gestützt werden. Der Landeklappenträger selbst ist von einer Verkleidung 100 umgeben und in der Darstellung von Fig. 1A nicht gezeigt. Die Landeklappenträgerverkleidung 100 erstreckt sich wesentlich in Flugrichtung entlang eines Teils der Unterseite der Tragfläche 402, im vorliegenden Fall z.B. von etwa der Mitte der Tragfläche 402 bis zur ihrer Hinterkante 404 oder geringfügig über diese hinaus.

Ebenfalls an der Unterseite der Tragfläche 402 in der Nähe der Landeklappenträgerverkleidung 100 befestigt ist eine Triebwerksaufhängung 116, die ein Strahltriebwerk 112 des Flugzeugs 118 trägt. Im Betrieb stößt das Strahltriebwerk 112 einen Antriebsstrahl 114 entgegen der Flugrichtung aus, dessen Querschnitt und Richtung vom Betriebszustand des Flugzeugs 118 abhängen. Die gestrichelte Linie in Fig. 1A markiert grob schematisch einen Querschnitt des Antriebsstrahls 114 im Bereich der Hinterkante 404 der Tragfläche bei Betrieb des Strahltriebwerks 112 am Boden, z.B. im Stillstand oder während der Beschleunigung am Boden beim Start. In diesem Betriebszustand ist der Antriebsstrahl 114 durch Einwirkung des Bodens nach außen abgelenkt, wobei die Landeklappenverkleidung 100 teilweise in den Antriebsstrahl 114 eintaucht, in verstärktem Maße dann, wenn zum Ausfahren der Landeklappen 400, 401 die Verkleidung 100 des Landeklappenträgers noch weiter als gezeigt nach unten abgesenkt ist.

In der vorliegenden Ausführungsform ist rein beispielhaft die Landeklappenträgerverkleidung 100 in wesentlich gleicher Entfernung vom Flugzeugrumpf 120 wie die Triebwerksaufhängung 116 angeordnet. Die Triebwerksaufhängung 116 kann z.B. eine Triebwerksaufhängungsverkleidung umfassen, die in die Verkleidung 100 des Landeklappenträgers übergeht.

An der Außenfläche 106 der Landeklappenträgerverkleidung 100 ist an der dem Strahl 114 zugewandten Seite, d.h. in diesem Fall der Bordinnenseite, von der der nach außen abgelenkte Strahl die Verkleidung 100 trifft, ein Strake 104 befestigt, der längs der Außenfläche 106 der Verkleidung 100 in Flugrichtung verläuft und an seinem dem Betrachter zugekehrten Ende in einer etwa senkrecht auf der Außenfläche 106 stehenden hinteren Kante 206 abschließt. Der Strake 104 verläuft in einer Ebene, die mit der Richtung vertikal nach unten 108 einen Winkel γ von ca. 40° bildet und auf der Außenfläche 106 der Verkleidung wesentlich senkrecht steht. In Bezug auf eine Längsachse 122 der Verkleidung 100 verläuft die Ebene des Strakes 104 wesentlich radial.

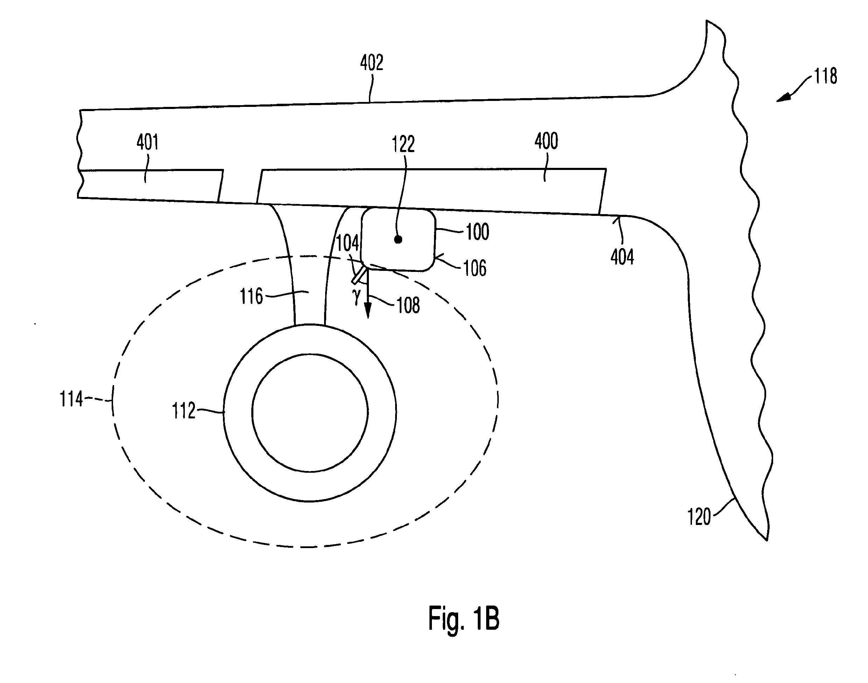

Figur 1B zeigt eine alternative Ausführungsform, bei der beispielhaft die Landeklappenträgerverkleidung 100 gegenüber der Triebwerksaufhängung 116 in Richtung der Bordinnenseite, d.h. zum Rumpf 120 hin versetzt angeordnet ist. Hierbei wird angenommen, dass Landeklappenträgerverkleidung 100 und Triebwerksaufhängung 116 um eine solche Distanz zueinander versetzt sind, dass der Antriebsstrahl 114 bei Betrieb des Strahltriebwerks 112 am Boden und Ablenkung des Strahls 114 nach außen aufgrund der Aufweitung des Strahls 114 von der Bordaußenseite her auf die Verkleidung 100 trifft. An der Außenfläche 106 der Landeklappenträgerverkleidung 100 ist an der dem Strahl 114 zugewandten Seite, d.h. in diesem Fall der Bordaußenseite, ein Strake 104 befestigt.

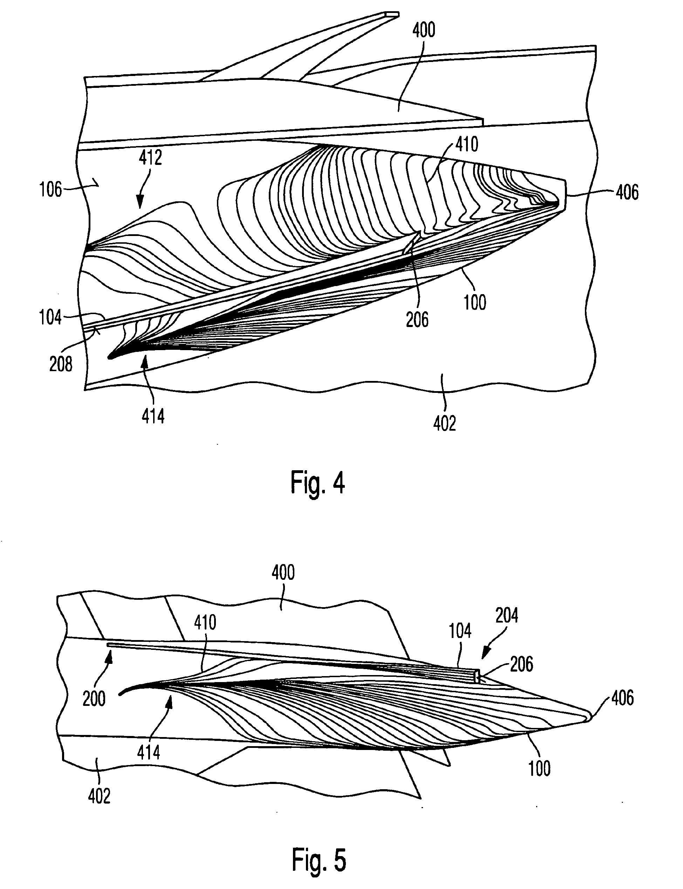

Figur 4 zeigt eine perspektivische Ansicht eines hinteren Abschnitts einer Landeklappenträgerverkleidung 100 gemäß einer weiteren Ausführungsform, die auf der Verkleidung des am weitesten außen liegenden Landeklappenträgers des Airbus A380 basiert. Bei diesem Flugzeugtyp befindet sich das äußerste Triebwerk in gleichem Abstand vom Flugzeugrumpf wie die gezeigte Landeklappenträgerverkleidung 100. An der Bordinnenseite, auf die der Blick des Betrachters von Fig. 4 fällt, wurde ein Strake 104 angefügt, der sich über eine Länge von 3 m entlang der Außenwand 106 der Verkleidung erstreckt, auf dieser senkrecht steht und einen Winkel γ=20° mit der vertikal nach unten weisenden Richtung bildet. Die Landeklappe 400 ist in einem abgesenkten Zustand gezeigt, in welchem die Verkleidung 100 bei Betrieb des Triebwerks in dessen Antriebsstrahl taucht.

Weiterhin gezeigt in Fig. 4 sind Flusslinien 410, die mit einem in der Strömungsmechanik üblichen hybriden Navier-Stokes-Verfahren numerisch berechnet wurden, um den aerodynamischen Fluss um die Verkleidung 100 in der gezeigten Stellung bei vollem Schub des Triebwerks am Boden zu simulieren. Eine erste Gruppe 414 von Flusslinien zeigt eine Strömung an der Bodenwand der Verkleidung 100 an, die im Wesentlichen entlang dem Strake 104 in der Flugrichtung bis zum hinteren Ende 406 der Verkleidung 100 geführt wird. Eine zweite Gruppe 412 von Flusslinien zeigt eine Strömung an der Bordinnenseitenwand der Verkleidung 100 an, die ebenfalls im Wesentlichen entlang dem Strake 104 in der Flugrichtung bis zum hinteren Ende 406 der Verkleidung 100 geführt wird, wo sie sich mit der Strömung der ersten Gruppe 414 vereinigt. Es liegt eine stabile Strömung ohne Vibrationen verursachende Oszillationen vor. Zudem erzeugt der gezeigte Strömungsverlauf über den Strake 104 eine zur Bordinnenseite (zum Betrachter) gerichtete Vorspannung der Verkleidung 100, die unabhängig vom Vorhandensein von Oszillationen verhindert, das Material der Verkleidung 100 abwechselnd auf Druck und Zug zu belasten, und so Materialermüdung vorbeugt.

Figur 5 zeigt eine Unteransicht des Abschnitts der Verkleidung aus Fig. 4, mit dem simuliertem Strömungsverlauf der Simulation aus Fig. 4. Deutlich ist der Verlauf des Strakes 104 zu erkennen, dessen Hinterkante 206 an seinem hinteren Ende 204 höher ausgebildet ist als die Vorderkante am vorderen Ende 200 desselben.

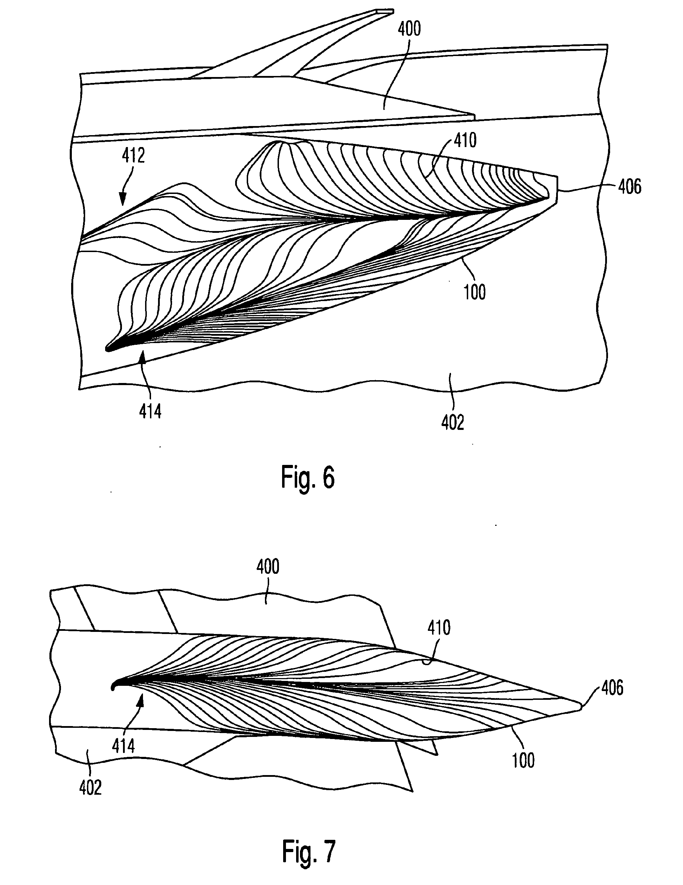

Figur 6 und 7 zeigen zum Vergleich einen hinteren Abschnitt einer herkömmlichen Landeklappenverkleidung, mit simuliertem Strömungsverlauf nach demselben Verfahren wie in Fig. 4 und 5. Die gezeigte Konfiguration entspricht der herkömmlichen Verkleidung des am weitesten außen liegenden Landeklappenträgers des Airbus A380.

Die erste Gruppe 414 von Flusslinien, welche an der Bodenwand der Verkleidung entlang strömt, weist eine erheblichen Anteil von Flusslinien mit nach oben, in Richtung der Seitenwand der Verkleidung 100 gerichteter Komponente auf. Ebenso weist die zweite Gruppe 412 von Flusslinien, welche an der Seitenwand der Verkleidung 100 entlang strömt, einen erheblichen Anteil von Flusslinien mit nach unten, zur Bodenwand hin gerichteter Komponente auf. Die durch die erste 414 und zweite 412 Gruppe gebildeten Flussfelder begegnen sich im Bereich des zum Bordinneren liegenden Radius der Verkleidung 100, wo sie ein instabiles Wirbelsystem bilden, das entsprechend der vom Gasstrom des Antriebsstrahls vorgegebenen lokalen Druckverteilung um den Boden- und Seitenwand der Verkleidung 100 verbindenden Radius tanzt. Das instabile Wirbelsystem führt zu einer oszillierenden Druckverteilung an der Oberfläche der Verkleidung, die Material schädigende Vibrationen verursacht.

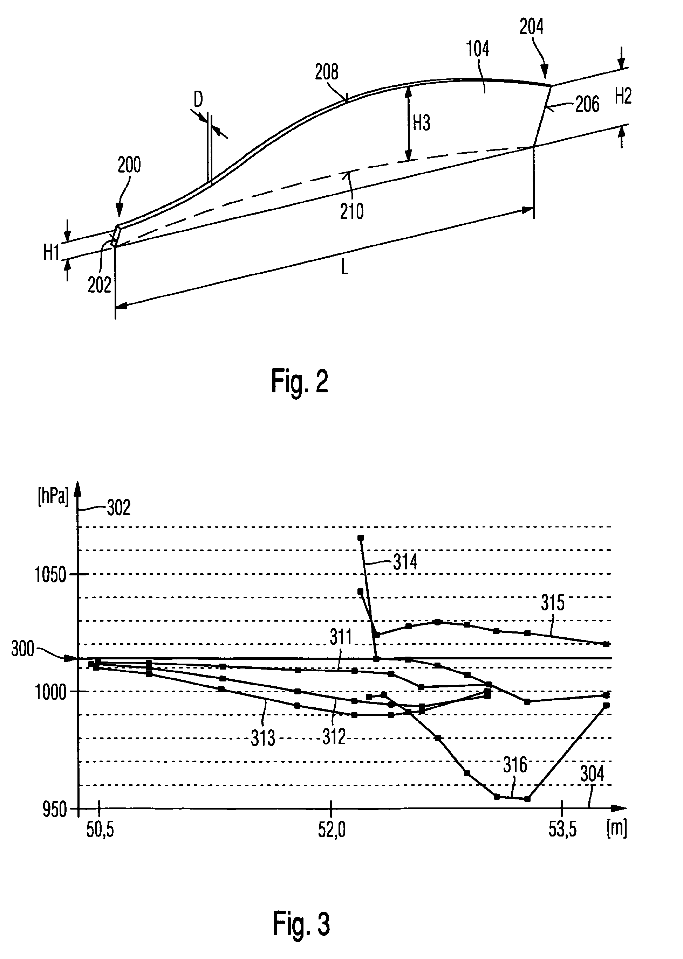

Figur 2 zeigt eine schematische perspektivische Ansicht eines Strakes einer Verkleidung gemäß einer Ausführungsform, z.B. der Ausführungsform aus Fig. 1. Der Strake 104 weist ein rechteckförmiges Querschnittsprofil der Dicke D und einer rechteckförmigen Oberkante 208 auf. Eine Unterkante 210 ist dem Konturverlauf der Außenfläche der Landeklappenträgerverkleidung angepasst. Am vorderen Ende 200 beginnt der Strake mit einer zur Außenfläche der Verkleidung wesentlich senkrecht stehenden Vorderkante 202 der Höhe H1, verläuft entlang der Oberkante 208 über seine Länge in Form eines Splines, der an einer von beiden Enden beabstandeten Stelle eine maximale Höhe H3 erreicht, und schließt am hinteren Ende 204 des Strakes mit einer ebenfalls wesentlich auf der Außenfläche der Verkleidung 100 senkrecht stehenden Hinterkante der Höhe H2 ab.

Figur 3 zeigt simulierte Funktionskurven von Druckverläufen an unterschiedlich geformten Strakes, die alle der anhand von Fig. 2 beschriebenen Grundform entsprechen, wobei für die Dicke D stets 3 mm, für die Höhe H1 stets 1 cm, und für die Höhe H2 stets 15 cm angenommen wurden. Der Simulation wurde abgesehen von der Form des Strakes jeweils eine Konfiguration wie in Figur 4 bis 7 gezeigt zugrunde gelegt.

Den Kurven 311 bis 313 entspricht jeweils ein Strake der Länge L=300 cm, wobei die Längenkoordinaten entlang der waagerechten Achse 304 den Abstand vom Zentrum des aerodynamischen Systems des Flugzeugs bezeichnen. Bei Kurve 311 bildet der Strake mit der Vertikalen nach unten einen Winkel von γ=0°, bei Kurve 312 einen Winkel von γ=30° und bei Kurve 312 einen Winkel von γ=20°. Jede Kurve gibt entlang der vertikalen Achse 302 den Druckverlauf am Strake an den jeweiligen Längenkoordinaten an, wobei der Atmosphärendruck 300 am Boden gesondert markiert wurde.

Bei den Kurven 314 bis 316 wurde ein Strake der Länge L=203 cm angenommen, der zudem wie aus den Längenkoordinaten ersichtlich weiter zum hinteren Ende der Verkleidung angeordnet ist. Bei Kurve 314 bildet der Strake mit der Vertikalen nach unten einen Winkel von γ=0°, bei Kurve 315 einen Winkel von γ=20° und bei Kurve 316 einen Winkel von γ=40°. Einen besonders günstigen Druckverlauf zeigt Kurve 313, bei welcher der Druck über die Länge des Strakes sanft variiert und die Line des Atmosphärendrucks 300 nicht überschritten wird, so dass der Strake und die Verkleidung nicht wechselnden Druck- und Zugspannungen ausgesetzt werden.

Ein derartiger Strake kann z.B. aus einem Verbundmaterial hergestellt und mittels in die Außenwand der Verkleidung eingebundener Befestigungselemente mit dieser verbunden werden.

Obwohl die vorliegende Erfindung anhand bevorzugter Ausführungsbeispiele vorliegend beschrieben wurde, ist sie darauf nicht beschränkt, sondern auf vielfältige Weise modifizierbar.

Beispielsweise kann die Erfindung auch auf andere Arten von Auftriebshilfen als Landeklappenträgerverkleidungen angewandt werden.

### Bezugszeichenliste

- 100: Landeklappenträgerverkleidung
- 101: Längsachse der Verkleidung
- 102: Landeklappenträger
- 104: Strake
- 106: Außenfläche
- 108: Richtung vertikal nach unten
- 110: Querprofil
- 112: Strahltriebwerk
- 114: Strahl
- 116: Triebwerkaufhängungsverkleidung
- 118: Flugzeug
- 120: Flugzeugrumpf
- 200: Vorderes Ende des Strakes
- 202: Vorderkante
- 204: Hinteres Ende des Strakes
- 206: Hinterkante
- 208: Oberkante
- 210: Unterkante
- 300: Atmosphärendruck
- 302: Simulierter Druckverlauf
- 304: x-Koordinate des Aerodynamischen Systems
- 311-316: Druckverteilungskurve
- 400, 401: Landeklappe
- 402: Tragfläche
- 404: Hinterkante der Tragfläche
- 406: Hinteres Ende der Verkleidung
- 410: Flusslinien
- 412: Fluss an Seitenwand
- 414: Fluss an Bodenwand
- D: Dicke des Strakes
- H1: Höhe an der Vorderkante
- H2: Höhe an der Hinterkante
- H3: Maximalhöhe
- γ: Winkel zur Senkrechten nach unten

## Patentansprüche

1. Flugzeug (118), aufweisend:
eine Auftriebshilfe (102) mit einer Verkleidung (100), welche mindestens einen Strake (104) aufweist, welcher wesentlich in Flugrichtung des Flugzeugs (118) sich erstreckend von einer Außenfläche (106) der Verkleidung (100) abragt; und
ein Strahltriebwerk (112), welches derart angeordnet ist, dass die Verkleidung (100) zumindest während eines Starts des Flugzeugs zumindest teilweise in einen Strahl (114) des Strahltriebwerks (112) eintaucht, wobei am Strake (104) eine Seitenkraft angreift, welche eine zur Seite gerichtete Vorspannung der Verkleidung (100) erzeugt, die verhindert, die Verkleidung (100) abwechselnd auf Druck und Zug zu belasten.

2. Flugzeug (118) nach Anspruch 1,
**dadurch gekennzeichnet,**
**dass** der Strake (104) als ein flächiges Gebilde geformt ist.

3. Flugzeug (118) nach Anspruch 1 oder 2,
**dadurch gekennzeichnet,**
**dass** der Strake (104) als eine Platte oder Planke konstanter Dicke (D) ausgebildet ist.

4. Flugzeug (118) nach wenigstens einem der vorhergehenden Ansprüche,
**dadurch gekennzeichnet,**
**dass** der Strake (104) senkrecht von der Außenfläche (106) abragt.

5. Flugzeug (118) nach wenigstens einem der vorhergehenden Ansprüche,
**dadurch gekennzeichnet,**
**dass** der Strake (104) in einer Ebene verläuft, welche einen Winkel (γ) zwischen 0° und 40° gegenüber einer Richtung (108) vertikal nach unten aufweist.

6. Flugzeug (118) nach wenigstens einem der vorhergehenden Ansprüche,
**dadurch gekennzeichnet,**
**dass** der Strake (104) eine Länge (L) von 1 m bis 3 m entlang der Außenfläche (106) aufweist.

7. Flugzeug (118) nach wenigstens einem der vorhergehenden Ansprüche,
**dadurch gekennzeichnet,**
**dass** der Strake (104) eine der Außenfläche (106) zugewandte Unterkante (210) aufweist, die einem Konturverlauf der Außenfläche (106) angepasst ist.

8. Flugzeug (118) nach Anspruch 7,
**dadurch gekennzeichnet,**
**dass** die Unterkante (210) strömungsdicht an den Konturverlauf der Außenfläche (106) angeschlossen ist.

9. Flugzeug (118) nach wenigstens einem der vorhergehenden Ansprüche,
**dadurch gekennzeichnet,**
**dass** der Strake (104) eine der Außenfläche (106) abgewandte Oberkante (208) mit einem in Form eines Splines glatt variierenden Höhenverlauf (H1, H3, H2) über der Außenfläche (106) aufweist.

10. Flugzeug (118) nach wenigstens einem der vorhergehenden Ansprüche,
**dadurch gekennzeichnet,**
**dass** der Strake (104) an seinem vorderen Ende (200) eine Vorderkante (202) und/oder an seinem hinteren Ende (204) eine Hinterkante (206) aufweist, welche senkrecht von der Außenfläche (106) der Verkleidung (100) verläuft.

11. Flugzeug (118) nach wenigstens einem der vorhergehenden Ansprüche,
**dadurch gekennzeichnet,**
**dass** der Strake (104) an seinem vorderen Ende (200) eine geringere Höhe (H1) aufweist als an seinem hinteren Ende (204).

12. Flugzeug (118) nach wenigstens einem der vorhergehenden Ansprüche,
**dadurch gekennzeichnet,**
**dass** der Strake (104) an seinem vorderen Ende (200) eine Höhe (H1) von 1 cm oder weniger aufweist.

13. Flugzeug (118) nach wenigstens einem der vorhergehenden Ansprüche,
**dadurch gekennzeichnet,**
**dass** der Strake (104) an seinem hinteren Ende (204) eine Höhe (H2) von 15 cm oder weniger aufweist.

14. Flugzeug (118) nach wenigstens einem der vorhergehenden Ansprüche,
**dadurch gekennzeichnet,**
**dass** der Strake (104) eine maximale Höhe (H3) an einer von seinem vorderen (200) und/oder hinteren (204) Ende beabstandeten Position aufweist.

15. Flugzeug (118) nach wenigstens einem der vorhergehenden Ansprüche,
**dadurch gekennzeichnet,**
**dass** der Strake (104) eine Dicke (D) von 2 mm bis 5 mm aufweist.

## Claims

1. Aircraft (118), comprising:
- a flap (102) comprising a fairing (100), which comprises at least one leading-edge extension (104), which projects, extending substantially in the flight direction of the aircraft (118), from the outer surface (106) of the fairing (100); and
- a jet engine (112), which is arranged in such a way that the fairing (100) dips at least in part into a jet (114) of the jet engine (1112), at least during the start-up of the aircraft, a lateral force acting on the leading-edge extension (104) and producing a laterally directed bias of the fairing (100), which prevents the fairing (100) from being alternately subjected to compression and tension

2. Aircraft (118) according to claim 1,
**characterised in that**
the leading-edge extension (104) is in the form of a planar construction.

3. Aircraft (118) according to either claim 1 or claim 2,
**characterised in that**
the leading-edge extension (104) is in the form of a plate or plank of a constant thickness (D).

4. Aircraft (118) according to at least one of the preceding claims,
**characterised in that**
the leading-edge extension (104) projects perpendicularly from the outer surface (106).

5. Aircraft (118) according to at least one of the preceding claims,
**characterised in that**
the leading-edge extension (104) extends in a plane which is at an angle (γ) of between 0° and 40° to a vertically downward direction (108).

6. Aircraft (118) according to at least one of the preceding claims,
**characterised in that**
the leading-edge extension (104) is of a length (L) of 1 m to 3 m along the outer surface (106).

7. Aircraft (118) according to at least one of the preceding claims,
**characterised in that**
the leading-edge extension (104) comprises a lower edge (210), facing the outer surface (106), which is matched to a contour progression of the outer surface (106).

8. Aircraft (118) according to claim 7,
**characterised in that**
the lower edge (210) is connected to the contour progression of the lower surface (106) in an airtight manner.

9. Aircraft (118) according to at least one of the preceding claims,
**characterised in that**
the leading-edge extension (104) comprises an upper edge (208), facing away from the outer surface (106), which has a height progression (H1, H3, H2) which varies smoothly in the form of a spline over the outer surface (106).

10. Aircraft (118) according to at least one of the preceding claims,
**characterised in that**
the leading-edge extension (104) comprises a front edge (202), at the front end (200) thereof, and/or a rear edge (206), at the rear end thereof, which extends perpendicularly from the outer surface (106) of the fairing (100).

11. Aircraft (118) according to at least one of the preceding claims,
**characterised in that**
the leading-edge extension (104) is of a lesser height (H1) at the front end (200) thereof than at the rear end (204) thereof.

12. Aircraft (118) according to at least one of the preceding claims,
**characterised in that**
the leading-edge extension (104) is of a height (H1) of 1 cm or less at the front end (200) thereof.

13. Aircraft (118) according to at least one of the preceding claims,
**characterised in that**
the leading-edge extension (104) is of a height (H2) of 15 cm or less at the rear end (204) thereof.

14. Aircraft (118) according to at least one of the preceding claims,
**characterised in that**
the leading-edge extension (104) is of a maximum height (H3) at a position at a distance from the front (200) and/or rear (204) end thereof.

15. Aircraft (118) according to at least one of the preceding claims,
**characterised in that**
the leading-edge extension (104) is of a thickness (D) of 2 mm to 5 mm.

## Revendications

1. Avion (118) présentant :
- un dispositif hypersustentateur (102) avec un carénage (100), qui présente au moins une extension de bord d'attaque (104), s'étendant sensiblement en saillie dans le sens de vol de l'avion (118) par rapport à une surface extérieure (106) du carénage (100) ; et
- un réacteur (112), qui est disposé de telle sorte que le carénage (100) s'immerge au moins pendant un démarrage de l'avion au moins partiellement dans un faisceau (114) du réacteur (112), une force latérale venant en contact avec l'extension de bord d'attaque (104), qui génère une précontrainte orientée vers le côté du carénage (100), qui empêche de solliciter le carénage (100) en alternance par compression et par traction.

2. Avion (118) selon la revendication 1, **caractérisé par le fait que** l'extension de bord d'attaque (104) présente la forme d'une structure plate.

3. Avion (118) selon la revendication 1 ou 2, **caractérisé par le fait que** l'extension de bord d'attaque (104) est agencée sous forme d'une plaque ou d'une planche d'épaisseur constante (D).

4. Avion (118) selon au moins l'une des revendications précédentes, **caractérisé par le fait que** l'extension de bord d'attaque (104) est en saillie perpendiculairement à la surface extérieure (106).

5. Avion (118) selon au moins l'une des revendications précédentes, **caractérisé par le fait que** l'extension de bord d'attaque (104) s'étend dans un plan qui présente verticalement vers le bas un angle (γ) compris entre 0° et 40° par rapport à une direction (108).

6. Avion (118) selon au moins l'une des revendications précédentes, **caractérisé par le fait que** l'extension de bord d'attaque (104) présente une longueur (L) de 1 m à 3 m le long de la surface extérieure (106).

7. Avion (118) selon au moins l'une des revendications précédentes, **caractérisé par le fait que** l'extension de bord d'attaque (104) présente un bord inférieur (210) dirigé vers la surface extérieure (106), qui est adapté à un contour de la surface extérieure (106).

8. Avion (118) selon la revendication 7, **caractérisé par le fait que** le bord inférieur (210) est connecté de manière étanche à l'écoulement au contour de la surface extérieure (106).

9. Avion (118) selon au moins l'une des revendications précédentes, **caractérisé par le fait que** l'extension de bord d'attaque (104) présente un bord supérieur (208) opposé à la surface extérieure (106) avec un tracé de hauteur (H1, H3, H2) à variation en continu sous la forme d'une cannelure sur la surface extérieure (106).

10. Avion (118) selon au moins l'une des revendications précédentes, **caractérisé par le fait que** l'extension de bord d'attaque (104) présente au niveau de son extrémité avant (200) un bord d'attaque (202) et/ou au niveau de son extrémité arrière (204) un bord de fuite (206), qui s'étend perpendiculairement à partir de la surface extérieure (106) du carénage (100).

11. Avion (118) selon au moins l'une des revendications précédentes, **caractérisé par le fait que** l'extension de bord d'attaque (106) du carénage (104) présente au niveau de son extrémité avant (200) une hauteur (H1) inférieure qu'au niveau de son extrémité arrière (204).

12. Avion (118) selon au moins l'une des revendications précédentes, **caractérisé par le fait que** l'extension de bord d'attaque (104) présente au niveau de son extrémité avant (200) une hauteur (H) de 1 cm ou inférieure.

13. Avion (118) selon au moins l'une des revendications précédentes, **caractérisé par le fait que** l'extension de bord d'attaque (104) présente au niveau de son extrémité arrière (204) une hauteur (H2) de 15 cm ou inférieure.

14. Avion (118) selon au moins l'une des revendications précédentes, **caractérisé par le fait que** l'extension de bord d'attaque (104) présente une hauteur maximale (H3) au niveau d'une position distante de son extrémité avant (200) et/ou arrière (204).

15. Avion (118) selon au moins l'une des revendications précédentes, **caractérisé par le fait que** l'extension de bord d'attaque (104) présente une épaisseur (D) de 2 mm à 5 mm.
